# EUROPEAN PATENT APPLICATION

(11) **EP 2 363 668 A1**
(43) Date of publication of application: **07.09.2011**
(21) Application number: 11156536.2
(22) Date of filing: 02.03.2011
(51) Int. Cl.: F25B 25/00, F25D 17/02

(54) **A plant for the production of thermal and/or frigorific energy and a method for its control**

(30) Priority: 05.03.2010 IT MI20100360
(71) Applicant: Climaveneta S.p.A., 31100 Treviso (IT)
(72) Inventor: Sormani, Giancarlo, 35128, Padova (IT); Pontarollo, Michele, 36061, Bassano del Grappa (Vicenza) (IT); Covolo, Mariano, 36064, Mason Vicentino (Vicenza) (IT); Fadiga', Francesco, 32020, Rivamonte Agordino (Belluno) (IT)
(74) Representative: Rapisardi, Mariacristina

(57) **Abstract**

The plant (1) for the production of thermal and/or frigorific energy comprises at least one primary water circuit (2) associated with at least one thermo-frigorific unit (3) able to run a thermo-frigorific cycle, and at least one secondary water circuit (4) for users (8, 9) uncoupled from said primary water circuit (2), in the logic controller of said at least one thermo-frigorific unit (3) a control logic being integrated, for the primary pumping means present in said primary water circuit (2).

## Description

The present invention refers to a plant for the production of thermal and/or frigorific energy including at least one primary water circuit associated with at least one thermo-frigorific unit able to run a thermo-frigorific cycle, and at least one secondary water circuit for users uncoupled from the primary water circuit.

The present invention also refers to a method for regulating the thermo-frigorific power supplied by such plant.

Within the known state of the art the management of the pumps of a plant is demanded to equipment external to the thermo-frigorific units, developed by plant designers, installers or other.

This in general determines a complication in the installation and the development of the entire plant, sometimes impairing the function and reliability of the thermo-frigorific units, penalizing the overall efficiency of the system.

Air conditioning plants are also common today, utilizing an inverter for the variation of the speed of the pump of the secondary water circuit, with a primary circuit with a fixed water flow rate in order to guarantee the correct function of refrigerators and heat pumps, which have on board electronic controllers able to manage the variations of thermal load just with the fixed water flow rate passing through the exchangers.

In the case that a variable water flow rate would be used in the primary circuit, uncontrolled swings would be started with serious chances of breakage of the ice of the exchangers, or in any case with malfunctions greatly affecting the reliability of the thermo-frigorific machines.

A variable speed pump is also used in plants mainly diffused in North America in which a single water circuit with variable flow rate is provided, without a secondary circuit. In such case for a regulation according to the load it is necessary to detect the pressure drop in the circuit at the users, modulating the pump in order to cancel the offset between the real and the nominal pressure drop.

One of the major drawbacks lamented by the known art consists in that, in order to reach a cost reduction for pumping water without affecting the function and efficiency of the plant and of the thermo-frigorific units integrated in it, it is necessary to provide for a specific equipment at the users.

For example, in the tradition plants having separated primary and secondary circuit with pumps with fixed flow rate, it is necessary to provide the secondary circuit with suitable three-way valves for regulating the water flow rate, whereas in the traditional plant with a single circuit with variable flow rate, it is necessary to install a pressure drop detector at the most disadvantaged users.

Technical task of the present invention is, therefore, to realize a plant for the production of thermal and/or frigorific energy and a method for its control, permitting to eliminate the technical drawbacks lamented by the known art.

Within this technical task one aim of the invention is to realize a plant for the production of thermal and/or frigorific energy and a method for its control, permitting to optimize the pumping costs maintaining the efficiency and function of the system.

Further aim of the invention is to realize a plant for the production of thermal and/or frigorific energy and a method for its control, permitting to optimize the pumping costs, independently from the type of equipment present at the users.

Not least aim of the invention is to realize a control method of a plant for the production of thermal and/or frigorific energy which can be implemented without changes in a plant which may be previously present at the users.

The technical task, and also these and other aims according to the present invention, are reached by realizing a plant for the production of thermal and/or frigorific energy comprising at least one primary water circuit associated with at least one thermo-frigorific unit able to run a thermo-frigorific cycle, and at least one secondary water circuit for users uncoupled from said primary water circuit, characterized in that in the logic controller of said at least one thermo-frigorific unit a control logic is integrated, for the primary pumping means present in said primary water circuit.

The control logic is advantageously independent from the type of the present secondary water circuit.

The integration of the control logic of the primary pumping means in the controller of said at least one thermo-frigorific unit permits to develop "plug and play" solutions, which guarantee the function and the reliability of said at least one unit by maximizing the overall efficiency of the system, simplifying the installation and the development of the overall plant.

Preferably the control logic modulates the flow rate of the primary pumping means in response to a power variation requested by the users.

Preferably the flow rate of said primary pumping means is modulated continuously through one or more frequency changers of the electric supply of said primary pumping means.

Preferably in response to a power variation requested by the users the logic controller regulates in combination the thermo-frigorific capacity of at least one thermo-frigorific unit and the flow rate of the primary pumping means.

Preferably the thermo-frigorific capacity of the at least one thermo-frigorific unit is continuously modulated.

Preferably the thermo-frigorific capacity of the at least one thermo-frigorific unit is modulated by keeping the water delivery temperature (Tout) within a suitable range of temperatures requested by the users.

Preferably when decreasing the thermo-frigorific power requested by the users, the flow rate of the at least one thermo-frigorific unit is modulated in order to keep the water inlet temperature within a suitable range of the nominal inlet temperature of the thermo-frigorific unit.

In a preferred embodiment of the invention, the secondary water circuit has secondary pumping means with constant flow rate.

In a different preferred embodiment of the invention, the secondary water circuit has secondary pumping means with variable flow rate.

In a still different preferred embodiment of the invention, the secondary water circuit has secondary pumping means with constant flow rate and secondary pumping means with variable flow rate.

Preferably in the case of a water/water type plant according to the invention, the logic controller has a water sparing function in a winter operation mode, by which it reduces up to a limit value the flow rate passing through the primary circuit, monitors the evaporation/condensation temperature and modulates the flow rate variation, in order to guarantee the keeping of the evaporation temperature within a range of values preserving the function and efficiency of the thermo-frigorific unit.

Similar function is present in a summer operation mode through which the controller reduces up to a limit value the flow rate passing through the primary circuit, monitors the condensation temperature and modulates the flow rate variation, in order to guarantee keeping of the condensation temperature within a range of values preserving the function and the efficiency of the thermo-frigorific unit.

Preferably the controller has a sparing function of the pumping costs of the primary pumping means by which, in case of a minimum or zero load, it turns-off any compressor present in said at least one unit and also turns-off said primary pumping means which are then cyclically turned-on, in order to verify if the return temperature to the water unit of the primary circuit confirms the present of a minimum or zero load, or if a temperature probe positioned inside the secondary circuit indicates a sudden load needed by the users.

If the plant according to the invention has a further circuit dedicated to the production of hot sanitary water, preferably the controller has a sparing function for the pumping costs of the primary pumping means, by which said primary pumping means are turned-off in presence of a minimum or zero load requested by the users of said dedicated circuit.

The present invention also teaches a method for regulating the thermo-frigorific power supplied by a plant for the production of thermal and/or frigorific energy, comprising at least one primary water circuit associated to at least one thermo-frigorific unit able to run a thermo-frigorific cycle, and at least one secondary water circuit for users, uncoupled from said primary water circuit, characterized in that it provides for the control of the thermo-frigorific capacity of said at least one thermo-frigorific unit in combination with the control of the primary pumping means present in said primary water circuit and exclusively demanded to a logic integrated in the logic controller of said at least one thermo-frigorific capacity, when lowering the thermo-frigorific power requested by the users, the thermo-frigorific capacity and the flow rate of said thermo-frigorific unit being modulated in order to keep the water delivery temperature (Tout) and respectively the intake water temperature (Tin) within a suitable temperature range requested by the users and respectively within a suitable range of the nominal inlet temperature.

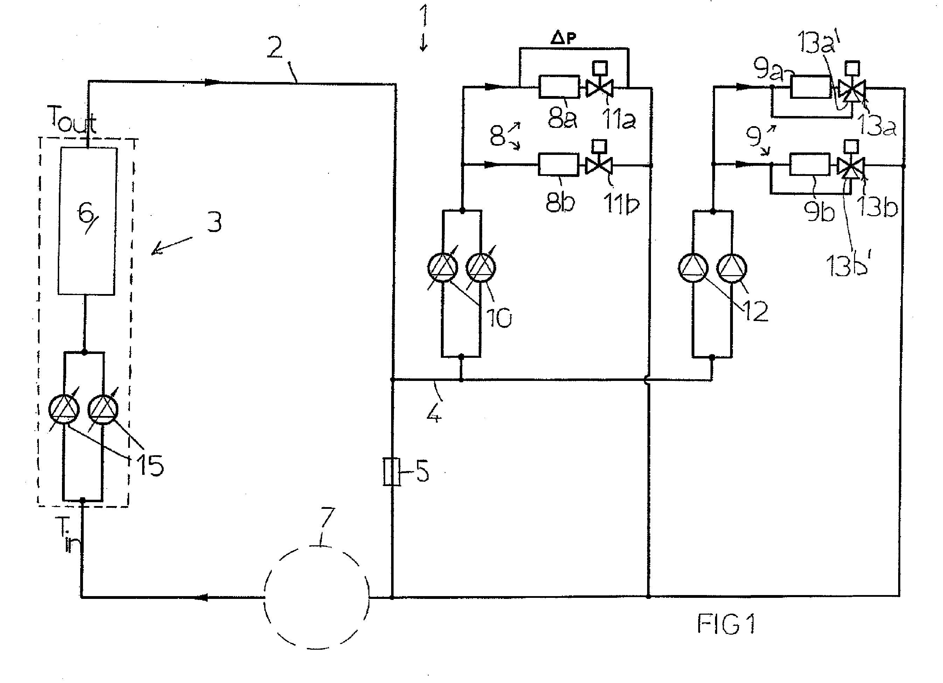

Further characteristics and advantages of the invention will be more evident from the description of a preferred but non exclusive embodiment of the plant according to the finding, illustrated in and indicative and non limitative way in the annexed drawing of figure 1 showing a plant diagram.

With reference to the cited figures, a plant for the production of thermal and/or frigorific energy is shown, indicated as a whole with the reference character 1.

The plant 1 comprises a primary water circuit 2 associated with a thermo-frigorific unit 3 able to run a thermo-frigorific cycle, and a secondary water circuit 4 for the users uncoupled from said primary water circuit 2 by means of an uncoupler 5.

The thermo-frigorific unit 3 for running the thermo-frigorific cycle namely comprises at least one compressor, at least one lamination valve, at least one condenser and at least one evaporator.

The thermo-frigorific unit 3 can be a chiller, a heat pump, or a polyvalent unit.

In the exemplary case in which the thermo-frigorific unit 3 is made by a chiller, only the evaporator is expressively represented with the reference character 6.

Tin indicates the water temperature of the primary circuit 2 at the intake of the thermo-frigorific unit 3 and Tout indicates the water temperature of the primary circuit 2 exiting from the thermo-frigorific unit 3.

To the primary circuit one or more variable delivery primary pumps 15 are associated, which feed the evaporator 6.

Of the primary circuit 2 also a part is made by an accumulator 7.

The secondary water circuit 4 comprises a first user 8 and a second user 9 on two parallel disposed branches.

The first user 8 is fed by one or more variable flow rate secondary pumps 10.

The first user 8 comprises a first sub-user 8a and a second sub-user 8b fed by the secondary pumps 10.

Downstream of each sub-user 8a and 8b a respective two-way interception valve 11a and 11b is connected in series.

Between the intake of the sub-user 8a and the delivery of the flow control valve 11a a measuring device of the water pressure drop is present.

The second user 9 is fed by one or more secondary constant flow rate pumps 12.

The second user 9 comprises a first sub-user 9a and a second sub-user 9b fed by the secondary pumps 12.

Downstream of each sub-user 9a and 9b a respective three-way valve 13a and 13b is connected in series.

Each three-way valve 13a and 13b has a second intake way 13a' and 13b' connected at the intake of the respective sub-user 9a and 9b.

In the logic controller (not shown) of the thermo-frigorific unit 3 a control logic of the primary pumps 15 is integrated.

The control logic of the primary pumps 15 is independent from the type of secondary water circuit 4 present, so that at the same time it is applied in combination with the first user 8 characterized by the presence of variable flow rate secondary pumps 10 and with the second user 9 characterized by the presence of constant flow rate secondary pumps 12.

The control logic of the primary pumps 15 modulates their flow rate in response to a power variation requested by the user.

The flow rate of the primary pumps 15 is in particular continuously modulated through one or more frequency variators of the electrical power supply with which they are fed.

The logic controller of the thermo-frigorific unit 3 in response to a frequency variation requested by the user regulates in combination the thermo-frigorific capacity of the thermo-frigorific unit 3 and the flow rate of the primary pumps 15.

Also the thermo-frigorific capacity of the thermo-frigorific unit 3 is continuously modulated.

The thermo-frigorific capacity of the thermo-frigorific unit 3 is modulated by keeping the water delivery temperature Tout within a suitable range around the temperature requested by the user.

When reducing the thermo-frigorific power requested by the user, the flow rate of the thermo-frigorific unit 3 is modulated in order to keep the water intake temperature Tin within a suitable range around the nominal intake temperature of the thermo-frigorific unit 3.

The operation of the plant is as follows.

The thermo-frigorific unit 3 must supply a determined power *q* to a carrier fluid, and bring the fluid to the user at a predetermined temperature Tout defined according to the needs of the user.

The power produced by the thermo-frigorific unit 3 can be represented, in overall general terms, by following simple formula: $q = \dot{m} ⋅ {cp}_{H ⁢ 2 ⁢ O} ⋅ Δ ⁢ T = \dot{m} ⋅ cp ⋅ \left|{T}_{IN}-{T}_{OUT}\right|$
where
*q* = heat flow [W]
*ṁ* = flow rate of fluid [kg/s]
cp= specific heat of the fluid at constant pressure [J/kgK]
□T = |Tin-Tout| = temperature difference between intake and exit of the unit [K]

In nominal operating conditions 3 the unit works with a determined flow rate *ṁ* and with a determined □T.

A load reduction can be obtained, being constant the delivery temperature Tout, either by reducing the □T being constant the flow rate *ṁ*, or maintaining the □T and reducing the flow rate *ṁ* or also working on both variables.

The controller therefore has suitable regulation algorithms acting both by modulating the frigorific capacity of the thermo-frigorific unit 3 and by varying the supply frequency of the primary pumps 15.

As said the controller of the unit 3 regulates the thermo-frigorific capacity in a continuous way, by keeping the delivery temperature Tout within a suitable range around the temperature determined by the user, and modulates the flow rate circulating in the primary circuit 3, through the use of frequency variators, in order to keep, when the load is reduced, the intake temperature Tin within a suitable range around the nominal intake temperature, that is to maintain the nominal □T of the unit.

The controller on board of the unit 3 constantly acquires and monitors the temperatures and the other significant variables of the plant, by acting on both regulations with the double aim to satisfy the load (by maintaining q and Tout) and to reduce the pumping costs (by reducing *ṁ*) keeping the efficiency and function of the system.

Such solution permits a relevant reduction of the pumping costs without impairing the function of the unit 3 and of the plant 1, is more flexible and can also be applied to existing plants, is independent from the type of secondary circuit 4 which can have both a fixed and variable flow rate (UTA, fan-coil with 2- or 3-way-valves, plants on floor, plants with cold beams, etc...), neither impairing nor modifying the user side, and facilitates the development of the plant.

The sparing of pumping costs is very high, as it is in fact known that the power absorbed by the pumps varies with the cube of the water delivery, and for example with 50% of the water delivery the power absorbed by the pump is one-eighth of that absorbed with 100% delivery.

A plant 1 according to the invention is advantageously provided with a series of additional functions having as a common denominator the sparing of pumping costs with a consequent increase of the overall efficiency of the unit 3 - plant 1 system.

A first function, which can be applied to all hydronic units (chiller, heat pumps, polyvalent units, etc.) consists in turning-off with suitable logics, once having satisfied the load of the plant, the pumps 15 of the primary circuit, which can have a variable speed, or also a fixed speed in a different preferred embodiment, and turning them on just when necessary.

The turning-on, turning-off and regulation of each compressor of the unit 3 occur as a function of the return temperature from the plant Tin and/or of the delivery temperature Tout. The pumps 15 of the primary circuit are generally always left running in order to guarantee the correct reading of the temperatures Tin and Tout.

Such first function permits to spare the pumping cost mainly in the conditions of minimum load or during an operation at night, when the unit 3 does not satisfy a real need of the users but only balances the dispersions of the plant 1.

This is the operation principle: once reached the load of the plant, the controller of the unit 3 turns-off each compressor of the unit 3 and thereafter it turns-off the pumps 15 of the primary circuit.

The pumps 15 of the primary circuit are cyclically turned-on again in order to verify if the return temperature Tin confirms the lack of load, or as a function of a possible additional probe, disposed in a relevant place of the secondary circuit 4, which signals a supervening need of a load from the users.

The frequency of the cyclic turn-ons follows a logic of the self-adaptive kind.

It is further possible, by using the programming of the time slots, to activate or deactivate such function according to the load expected for the plant 1.

In the case of a polyvalent unit for a four-tube plant which produces both hot and cold water on two separate circuits, with this function it is possible to stop the pumps on the circuit needing a zero or small load. This occurs in winter, when the request of hot water could be high and that of cold water could be low, the cold water pumps with this function being temporarily actuated.

In summer the request of cold water could be high and that of hot water could be low, so that with this function the hot water pumps are temporarily actuated.

A second function refers to the units making it possible to produce in addition to hot/cold water on each primary circuit, hot water for sanitary use on a further dedicated circuit (for example, chiller and heat pumps with partial or total recovery).

Even in this case the integrated controller actuates the pumps of the sanitary water circuit just when there is the need of such load and always considering the state and the working conditions of the unit, so preserving its function.

To exemplify the operation, consider a heat pump used by a hotel unit; in the hours of greater load, for example in the late afternoon, the unit guarantees the heating requirement of hot water for sanitary use; in the night hours the unit keeps the temperature of the hot water accumulated but there is no real consumption by the users and therefore it is possible to turn-off the pumps of the primary circuit sparing energy without impairing the function of the plant.

In the early morning hours, when a new load is anticipated for the plant, the pumps are turned-on again in order to guarantee a timely response to the needs of the user. The pumps are in any case periodically turned-on again in order to verify if unpredictable loads have arisen.

A third function can be applied to the water/water heat pump units and to the water/water polyvalent units and permits to the user to spare tap or well water in the winter operation mode.

With such system water is spared, an increasingly valuable good, and the relating pumping costs are reduced.

When actuating such function, the controller integrated in the unit reduces the flow rate passing through the evaporator up to a limit value which preserves the function and efficiency of the unit itself.

The flow rate modulation can be made, according to the embodiment:

by modulating a two-way valve either in case of a disposal, or by continuously modulating the rotation speed of an inverter feeding the disposal pump, or by acting on the number of active pumps if they are more than one.

The reduction of the water supplied to the evaporator involves a lower exit temperature of the evaporator with a consequent reduction of the evaporation temperature. The integrated controller of the unit monitors the evaporation temperature and modulates the flow rate variation in order to guarantee the evaporation temperature within certain limits so preserving the function and efficiency of the unit.

The overall efficiency of the plant remains practically unchanged tank to the lower energy needed for pumping.

The plant for the production of thermal and/or frigorific energy so conceived is subject to many changes and variations, all within the scope of the inventive concept; furthermore all details can be substituted with technically equivalent elements.

In practice the used materials, and also the dimensions, can be of any kind according to the needs and the state of the art.

## Claims

1. A plant (1) for the production of thermal and/or frigorific energy including at least a primary water circuit (2) associated with at least a thermofrigorific unit (3) able to run a thermofrigorific cycle, and at least a secondary water circuit (4) for users (8, 9) uncoupled from said primary water circuit (2), **characterised in that** in the logic controller of said at least one thermofrigorific unit (3) a control logic is integrated, for the primary pumping means (15) present in said primary water circuit (2).

2. The plant (1) for the production of thermal and/or frigorific energy according to claim 1, **characterised in that** said control logic is independent from the type of the present secondary water circuit (4).

3. The plant (1) for the production of thermal and/or frigorific energy according to one or more preceding claims, **characterised in that** said control logic modulates the delivery of said primary pumping means (15) in response to a power variation requested by the users (8, 9) .

4. The plant (1) for the production of thermal and/or frigorific energy according to preceding claim, **characterised in that** the delivery of said primary pumping means (15) is modulated continuously through one or more frequency variators of the electric supply of said primary pumping means (15).

5. The plant (1) for the production of thermal and/or frigorific energy according to one or more preceding claims, **characterised in that** in response to a power variation requested by the users (8, 9) said logic controller regulates in combination the thermofrigorific capacity of said thermofrigorific unit (3) and the delivery of the primary pumping means (15).

6. The plant (1) for the production of thermal and/or frigorific energy according to preceding claim, **characterised in that** the thermofrigorific capacity of said thermofrigorific unit (3) is continuously modulated.

7. The plant (1) for the production of thermal and/or frigorific energy according to any preceding claims, **characterised in that** the thermofrigorific capacity of said thermofrigorific unit (3) is modulated by keeping the water delivery temperature (Tout) within the range of temperatures requested by the users (8, 9).

8. The plant (1) for the production of thermal and/or frigorific energy according to preceding claim, **characterised in that** decreasing the thermofrigorific power requested by the users (8, 9), the delivery of said thermofrigorific unit (3) is modulated in order to keep water inlet temperature (Tin) within the range of the nominal inlet temperature of the thermofrigorific unit (3).

9. The plant (1) for the production of thermal and/or frigorific energy according to any preceding claim, **characterized in that** said secondary water circuit (4) has secondary pumping means with constant delivery.

10. The plant (1) for the production of thermal and/or frigorific energy according to any preceding claim, **characterized in that** said secondary water circuit (4) has secondary pumping means with controllable delivery.

11. The plant (1) for the production of thermal and/or frigorific energy according to any preceding claim, **characterized in that** said secondary water circuit (4) has secondary pumping means with constant delivery (12) and secondary pumping means with controllable delivery (10).

12. The plant (1) of the water/water type for the production of thermofrigorific energy according to any preceding claim, **characterized in that** said logic controller has a water sparing function by which it reduces up to a limit value the delivery passing through the primary circuit (2), monitors the evaporation/condensation temperature and modulates the delivery variation, in order to keep the evaporation/condensation temperature within a range of values preserving the functionality and efficiency of the thermofrigorific unit (3).

13. The plant (1) for the production of thermal and/or frigorific energy according any preceding claim, **characterized in that** said controller has a sparing function of the pumping costs of the primary pumping means (15) by which, in case of a minimum or zero load it switches off any compressor present in said at least one unit (3) and switches off also said primary pumping means (15) which are then switched on cyclically, in order to verify if the return temperature to the water unit of the primary circuit (2) confirms the presence of a reduced or zero load, or if a temperature probe positioned inside the secondary circuit (4) indicates suddenly a load needed by the users (8, 9) .

14. The plant (1) for the production of thermal and/or frigorific energy according any preceding claim, having a further circuit, dedicated to the production of hot sanitary water, **characterized in that** said controller has a sparing function for the pumping costs of the primary pumping means (15), by which said primary pumping means (15) are switched-off if a minimum or zero load is present, as requested by the users of said dedicated circuit.

15. A method for regulating the thermofrigorific power supplied by a plant (1) for the production of thermal and/or frigorific energy, comprising at least one primary water circuit (2) associated to at least one thermofrigorific unit (3) able to perform a thermofrigorific cycle, and at least one secondary water circuit (4) for the users (8, 9), uncoupled from said primary water circuit (2), **characterized in that** it provides for the control of the thermofrigorific delivery of said at least one thermofrigorific unit (3) in combination with the control of the primary pumping means (15) present in said primary water circuit (2) and exclusively demanded to an integrated logic in the logic controller of said at least one thermofrigorific unit (3), when lowering the thermo-frigorific power requested by the users (8, 9), the thermofrigorific delivery and the capacity of said thermofrigorific unit (3) being modulated in order to keep the water delivery temperature (Tout) and respectively the inlet water temperature (Tin) within a temperature range requested by the users (8, 9) and respectively within a range of the nominal inlet temperature.
